# EUROPÄISCHE PATENTSCHRIFT

(11) **EP 2 225 816 B1**
(45) Veröffentlichungstag und Bekanntmachung des Hinweises auf die Patenterteilung: **18.05.2011**
(21) Anmeldenummer: 07847391.5
(22) Anmeldetag: 27.11.2007
(51) Int. Cl.: H02K 3/26, H02K 41/03, H02K 3/20

(54) **ELEKTRISCHER LINEARANTRIEB**
ELECTRIC LINEAR DRIVE
MOTEUR LINÉAIRE ÉLECTRIQUE

(43) Veröffentlichungstag der Anmeldung: 08.09.2010
(73) Patentinhaber: INA Drives & Mechatronics GmbH & Co. oHG, 98527 Suhl (DE)
(72) Erfinder: SCHUEPPLER, Reiner, 98634 Wasungen (DE); SCHUELER, Ralf, 98530 Wichtshausen (DE)
(86) Internationale Anmeldenummer: PCT/EP2007/062864
(87) Internationale Veröffentlichungsnummer: WO 2009/068080

(56) Entgegenhaltungen:
- US-A- 3 093 762
- US-A1- 2002 185 919

## Beschreibung

### Gebiet der Erfindung

Die Erfindung betrifft einen elektrischen Linearantrieb, welcher als gedruckte Schaltung aufgebaute bestrombare Leiterwicklungen aufweist.

### Hintergrund der Erfindung

Lineare und rotative Motoren mit Wicklungen in Form gedruckter Schaltungen sind prinzipiell aus der US 2002/0185919 A1 bzw. US 3,093,762 A bekannt.

Die US 2002/0185919 Offenbart einen elektrischen Linearantrieb mit einer bestrombare Windungen aufweisenden Verbundplatine mit folgendem Schichtaufbau: Alternierende Zwischenschichten aus Isoliermaterial und Windungsanordnungen, wobei jede Windungsanordnung eine Trägerschicht aus einem Isolatormaterial aufweist, auf welcher beidseitig Leitermaterial in Form von Windungen aufgebracht ist.

Aus der EP 0 710 408 B1 ist ein elektrischer Linearantrieb bekannt, der Statorwicklungen aufweist, die in Form rechteckiger Spiralen, welche aus leitendem Material auf ein Substratblatt aufgebracht sind, ausgebildet sind. Mehrere Statorwicklungen des bekannten Linearantriebs sind typischerweise in Reihe geschaltet. Ebenso sollen Anordnungen möglich sein, in denen Ströme unterschiedlicher Größenordnungen in verschiedenen Wicklungen fließen.

### Aufgabe der Erfindung

Der Erfindung liegt die Aufgabe zugrunde, einen elektrischen Linearantrieb anzugeben, welcher sich durch ein besonders günstiges Verhältnis zwischen Herstellungsaufwand, Bauraumbedarf und erzielbarer Leistung auszeichnet.

### Zusammenfassung der Erfindung

Diese Aufgabe wird erfindungsgemäß gelöst durch einen Linearantrieb mit den Merkmalen des Anspruchs 1.

Der Linearantrieb weist als gedruckte Schaltung ausgebildete Wicklungen auf, welche Teil des Stators oder Teil des Läufers des Linearantriebs sein können. In jedem Fall ist die gedruckte Schaltung als Verbundplatine, das heißt in Multilayer-Technologie, mit folgendem Schichtaufbau ausgebildet:
An beiden Außenseiten der Verbundplatine befindet sich jeweils eine Schirmschicht aus elektrisch leitendem Material, welche auf eine Isolatorschicht aufgebracht ist. Auf der der außenliegenden Schirmschicht gegenüberliegenden Seite der Isolatorschicht befindet sich jeweils eine weitere Schirmschicht. Jede Anordnung aus Isolatorschicht und beidseitig auf dieser aufgebrachten Schirmschichten wird zusammenfassend als Schirmanordnung bezeichnet. An die Innenseiten der beiden Schirmanordnungen grenzt jeweils eine Zwischenschicht aus einem Isoliermaterial. Zwischen den beiden die Schirmanordnungen kontaktierenden Zwischenschichten befinden sich mehrere Windungsanordnungen, welche wiederum durch Zwischenschichten aus Isoliermaterial voneinander getrennt sind. Ebenso wie die Schirmanordnungen ist auch jede Windungsanordnung dreischichtig aufgebaut, wobei im Fall der Windungsanordnung auf eine Trägerschicht aus Isoliermaterial beidseitig Leitermaterial in Form von Windungen aufgebracht ist. Insgesamt weist die Verbundplatine in bevorzugter Ausgestaltung mindestens 16 Schichten aus Leitermaterial auf, wovon vier Schichten Schirmschichten sind.

Zumindest eine Schirmschicht einer Schirmanordnung kann kammförmig strukturiert sein; vorzugsweise sind die beiden Schirmschichten einer Schirmanordnung in überlappender Anordnung kammartig geformt. Hiermit sind Ausführungsformen für Zwischenkreisspannungen bis 600 VDC realisierbar. Die Schirmschichten können an ihren Rändern Leiterstrukturen aufweisen, die die Verdrahtung von Temperatursensoren und Thermoschaltern zur Überwachung des elektrischen Linearantriebs ermöglichen.

Jede Leiterschicht der Verbundplatine weist vorzugsweise eine Dicke von mindestens 70 µm auf. Der flächenbezogene Leiterbedeckungsgrad, das heißt der Anteil des Leitermaterials an der Gesamtfläche der entsprechenden Schicht beträgt in bevorzugter Ausgestaltung mindestens 75 %. Dies gilt zumindest für die Windungsschichten, bevorzugt auch für die Schirmschichten. Der volumenbezogene Leiterfüllgrad, das heißt der Volumenanteil des Leitermaterials am Gesamtvolumen der Verbundplatine, beträgt vorzugsweise mindestens 30 %. Das Leitermaterial in der Verbundplatte hat vorzugsweise eine Masse von mindestens 2/3 der Gesamtmasse der Verbundplatine.

Nachfolgend wird ein Ausführungsbeispiel der Erfindung anhand einer Zeichnung näher erläutert. Hierin zeigen:

### Kurze Beschreibung der Zeichnung

- Figur 1: in grob schematisiertem Querschnitt einen elektri- schen Linearantrieb,
- Figur 2: den Schichtaufbau einer bestrombare Wicklungen aufweisenden Verbundplatine des Linearantriebs nach Figur 1.

### Ausführliche Beschreibung der Zeichnung

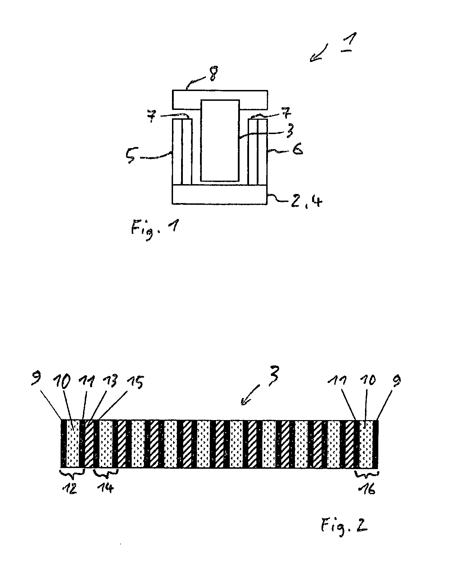

Ein in Figur 1 stark vereinfacht dargestellter elektrischer Linearantrieb 1 setzt sich zusammen aus einem Stator 2 und einem relativ zu diesem verfahrbaren Läufer 3. Mittel zur Lagerung des Läufers 3 sind in Figur 1 nicht dargestellt. Der Läufer 3 ist senkrecht zur Zeichenebene verfahrbar. Im Ausführungsbeispiel weist der Stator 2 eine Grundplatte 4 auf, auf welcher zwei Statorplatten 5, 6 angeordnet sind, auf denen jeweils eine Anzahl Permanentmagnete 7, insbesondere Seltenerdmagnete, befestigt sind. Mit dem Läufer 3 ist ein Anschlussbauteil 8 fest verbunden.

Der symmetrisch zwischen den Statorplatten 5, 6 angeordnete Läufer 3 ist als Verbundplatine mit dem in Figur 2 dargestellten Schichtaufbau ausgebildet. Die Gestaltung des Läufers 3 als Verbundplatine, das heißt in Multilayer-Technologie, ermöglicht einen Aufbau des elektrischen Linearantriebs 1 ohne externen Spulenhalter.

Eine Schirmschicht 9 als äußerste, der Statorplatte 5 zugewandte Schicht der Verbundplatine 3 ist aus Kupferfolie gefertigt. Die Schirmschicht 9 wird getragen von einer Isolatorschicht 10 aus einem Prepreg-Material. Auf der der außenliegenden Schirmschicht 9 gegenüberliegenden Seite der Isolatorschicht 10 befindet sich eine weitere Schirmschicht 11. Die Schirmschichten 9, 11 sind in sich überlappender Weise kammförmig gestaltet. Die Anordnung aus den beiden Schirmschichten 9, 11 und der diese tragenden Isolatorschicht 10 wird als Schirmanordnung 12 bezeichnet. An die Schirmanordnung 12 schließt sich innerhalb der Verbundplatine 3 eine Zwischenschicht 13 aus Isoliermaterial, beispielsweise FR4-Leiterplattenmaterial, an. Die Zwischenschicht 13 weist im Ausführungsbeispiel die gleiche Dicke wie die Isolatorschicht 10, nämlich 100 µm, auf. Auf der der Schirmanordnung 12 gegenüberliegenden Seite der Zwischenschicht 13 grenzt an diese eine Windungsanordnung 14, welche im dargestellten Querschnitt einen Aufbau aufweist, der dem Aufbau der Schirmanordnung 12 entspricht. Ebenso wie die Schirmanordnung 12 weist die Windungsanordnung 14 eine Isolatorschicht 10 auf, welche jedoch Windungen 15 bildendes Leitermaterial trägt. Die einzelnen, beidseitig auf der Isolatorschicht 10 der Windungsanordnung 14 angeordneten Windungen 15 weisen im Wesentlichen eine in Figur 2 nicht erkennbare rechteckige Form auf.

Jeweils durch isolierende Zwischenschichten 13 voneinander getrennt befinden sich in der Verbundplatine 3 insgesamt 8 Windungsanordnungen 14 und damit 16 Leiterschichten mit Windungen 15. Auf der der Statorplatte 6 zugewandten Seite der Verbundplatine 3 ist diese, ebenso wie auf der der Statorplatte 5 zugewandten Seite, durch eine Schirmanordnung 16 abgeschlossen, deren Aufbau dem Aufbau der in den Figuren 1 und 2 links angeordneten Schirmanordnung 12 entspricht. Die gesamte Verbundplatine 3, auch als Multilayer-Platine bezeichnet, weist damit 20 Schichten 9, 11, 15 aus Leitermaterial, nämlich Kupfer mit einer Dicke von 70 µm, auf. Die Windungen 15 sind als aufgewachsenes Dickkupfer gefertigt, welches die Gesamtfläche der jeweiligen Windungsanordnung 14 zu mindestens 75 % bedeckt. Am gesamten Volumen der Verbundplatine 3 hat das in Form von Windungen 15 und Schirmschichten 9, 11 vorhandene Leitermaterial einen Volumenanteil von mindestens 30 %. Dieser Wert wird auch als volumenbezogener Leiterfüllgrad bezeichnet. Der Massenanteil des Leitermaterials an der Gesamtmasse der Verbundplatine 3 beträgt mindestens 2/3. Damit weist der Läufer 3 des elektrischen Linearantriebs 1 eine im Vergleich zur erzielbaren Leistung außerordentlich niedrige Massenträgheit auf. Auf das Volumen der Verbundplatine 3 bezogen ist mit dem Linearmotor 1 eine Kraft von mindestens 4 N/cm³ erzeugbar.

### Bezugszeichen

- 1: Linearantrieb
- 2: Stator
- 3: Läufer
- 4: Grundplatte
- 5: Statorplatte
- 6: Statorplatte
- 7: Permanentmagnet
- 8: Anschlussbauteil
- 9: Schirmschicht
- 10: Isolatorschicht
- 11: Schirmschicht
- 12: Schirmanordnung
- 13: Zwischenschicht
- 14: Windungsanordnung
- 15: Windung
- 16: Schirmanordnung

## Patentansprüche

1. Elektrischer Linearantrieb (1), mit einer bestrombare Windungen (15) aufweisenden Verbundplatine (3) mit folgendem Schichtaufbau:
• eine erste außenliegende Schirmanordnung (12) weist eine Isolatorschicht (10) auf, auf welche beidseitig eine Schirmschicht (9, 11) aus einem Leitermaterial aufgebracht ist,
• an die erste außenliegende Schirmanordnung (12) schließen sich alternierend Zwischenschichten (13) aus Isoliermaterial und Windungsanordnungen (14) an, wobei jede Windungsanordnung (14) eine Trägerschicht aus einem Isolatormaterial (10) aufweist, auf welcher beidseitig Leitermaterial in Form von Windungen (15) aufgebracht ist,
• eine zweite außenliegende Schirmanordnung (16) ist, an eine Zwischenschicht (13) grenzend, mit einem Aufbau entsprechend der ersten außenliegenden Schirmanordnung (12), auf der dieser gegenüberliegenden Seite der Verbundplatine (3) angeordnet.

2. Linearantrieb (1) nach Anspruch 1, **dadurch gekennzeichnet, dass** die Verbundplatine (3) mindestens 16 Schichten (9, 11, 15) aus Leitermaterial aufweist.

3. Linearantrieb (1) nach Anspruch 1 oder 2, **dadurch gekennzeichnet, dass** die Schirmanordnung (12, 16) eine erste kammförmige Schirmschicht (9) aus Leitermaterial aufweist.

4. Linearantrieb (1) nach Anspruch 3, **dadurch gekennzeichnet, dass** die Schirmanordnung (12, 16) eine zweite, mit der ersten kammförmigen Schirmschicht (9) überlappende kammförmige Schirmschicht (11) aufweist.

5. Linearantrieb (1) nach einem der Ansprüche 1 bis 4, **dadurch gekennzeichnet, dass** jede Schicht (9, 11, 15) aus Leitermaterial mindestens 70 µm dick ist.

6. Linearantrieb (1) nach einem der Ansprüche 1 bis 5, **dadurch gekennzeichnet, dass** die Leitermaterial aufweisenden Schichten (9, 11, 15) einen Leiterbedeckungsgrad von mindestens 75 % aufweisen.

7. Linearantrieb (1) nach einem der Ansprüche 1 bis 6, **dadurch gekennzeichnet, dass** die Verbundplatine (3) einen volumenbezognen Leiterfüllgrad von mindestens 30 % aufweist.

8. Linearantrieb (1) nach einem der Ansprüche 1 bis 7, **dadurch gekennzeichnet, dass** der Massenanteil des Leitermaterials an der Verbundplatine (3) mindestens 2/3 beträgt.

## Claims

1. Electric linear drive (1), having a composite printed circuit board (3) which has turns (15) to which power can be supplied and which has the following layer structure:
• a first external shield arrangement (12) has an insulator layer (10) to both sides of which a screen layer (9, 11) which is composed of conductor material is applied,
• intermediate layers (13) which are composed of insulating material and turn arrangements (14) alternately adjoin the first external screen arrangement (12), with each turn arrangement (14) having a carrier layer which is composed of an insulator material (10) and to both sides of which conductor material in the form of turns (15) is applied,
• a second external screen arrangement (16) is arranged, so as to border an intermediate layer (13) and with a structure which corresponds to the first external screen arrangement (12), on that side of the composite printed circuit board (3) which is situated opposite the said first external screen arrangement.

2. Linear drive (1) according to Claim 1, **characterized in that** the composite printed circuit board (3) has at least 16 layers (9, 11, 15) which are composed of conductor material.

3. Linear drive (1) according to Claim 1 or 2, **characterized in that** the screen arrangement (12, 16) has a first comb-like screen layer (9) which is composed of conductor material.

4. Linear drive (1) according to Claim 3, **characterized in that** the screen arrangement (12, 16) has a second comb-like screen layer (11) which forms an overlap with the first comb-like screen layer (9).

5. Linear drive (1) according to one of Claims 1 to 4, **characterized in that** each layer (9, 11, 15), which is composed of conductor material, is at least 70 µm thick.

6. Linear drive (1) according to one of Claims 1 to 5, **characterized in that** the layers (9, 11, 15), which have conductor material, have a degree of conductor coverage of at least 75%.

7. Linear drive (1) according to one of Claims 1 to 5, **characterized in that** the composite printed circuit board (3) has a volume-related conductor filling level of at least 30%.

8. Linear drive (1) according to one of Claims 1 to 7, **characterized in that** the proportion by mass of the conductor material in the composite printed circuit board (3) is at least 2/3.

## Revendications

1. Entraînement linéaire électrique (1) comprenant une carte de circuit (3) comprenant des enroulements (15) pouvant être alimentés en courant, comportant la structure de couches suivante :
• un premier agencement d'écran (12) externe comporte une couche isolante (10) sur les deux faces de laquelle est appliquée une couche d'écran (9, 11) constituée de matériau conducteur ;
• des couches intermédiaires (13) alternées constituées de matériau isolant et d'agencements d'enroulements (14), sont connectées à l'agencement d'écran (12) externe, dans lequel chaque agencement d'enroulement (14) présente une couche de support constituée de matériau isolant (10) sur les deux faces de laquelle est appliqué un matériau conducteur sous forme d'enroulements (15) ;
• un deuxième agencement d'écran externe (16) est agencé de façon adjacente à une couche intermédiaire (13) et présente une structure qui correspond au premier agencement d'écran externe (12), sur la face de la carte de circuit (3) qui est opposée audit premier agencement d'écran externe.

2. Entraînement linéaire (1) selon la revendication 1, **caractérisé en ce que** la carte de circuit (3) comprend au moins 16 couches (9, 11, 15) constituées de matériau conducteur.

3. Entraînement linéaire (1) selon la revendication 1 ou 2, **caractérisé en ce que** l'agencement d'écran (12, 16) comprend une première couche en forme de peigne (9) constituée de matériau conducteur.

4. Entraînement linéaire (1) selon la revendication 3, **caractérisé en ce que** l'agencement d'écran (12, 16) comprend une deuxième couche d'écran en forme de peigne (11) superposée à la première couche d'écran en forme de peigne (9).

5. Entraînement linéaire (1) selon l'une des revendications 1 à 4, **caractérisé en ce que** chaque couche (9, 11, 15) constituée de matériau conducteur a une épaisseur d'au moins 70 µm.

6. Entraînement linéaire (1) selon l'une des revendications 1 à 5, **caractérisé en ce que** les couches (9, 11, 15) comprenant du matériau conducteur présentent un taux de recouvrement de conducteur d'au moins 75 %.

7. Entraînement linéaire (1) selon l'une des revendications 1 à 6, **caractérisé en ce que** la carte de circuit (3) présente un taux de remplissage en volume d'au moins 30 %.

8. Entraînement linéaire (1) selon l'une des revendications 1 à 7, **caractérisé en ce que** la fraction massique du matériau conducteur de la carte de circuit (3) est d'au moins 2/3.
